# EUROPÄISCHE PATENTANMELDUNG

(11) **EP 2 620 934 A1**
(43) Veröffentlichungstag der Anmeldung: **31.07.2013**
(21) Anmeldenummer: 12152286.6
(22) Anmeldetag: 24.01.2012
(51) Int. Cl.: G09B 19/00, G06Q 90/00

(54) **Verfahren und elektronisches System zur Intelligenzmessung**

(71) Anmelder: Ackerschott und Bertram GmbH, 53115 Bonn (DE)
(72) Erfinder: Ackerschott, Harald, 53179 Bonn (DE)
(74) Vertreter: Cohausz & Florack

(57) **Zusammenfassung**

Die Erfindung bezieht sich auf ein Verfahren zur Messung der Intelligenz, umfassend das mindestens einmalige Ausführen der Schritte: Auswählen mindestens einer Prüfungsaufgabe aus einer Menge an Prüfungsaufgaben, Übertragen der mindestens einen ausgewählten Prüfungsaufgabe, Empfangen einer Lösungseingabe und einer gemessenen Zeit zwischen einem Darstellen der jeweiligen Prüfungsaufgabe und der Lösungseingabe auf die jeweilige Prüfungsaufgabe für jede der mindestens einen ausgewählten Prüfungsaufgabe, Prüfen der empfangenen Lösungseingabe auf Übereinstimmung mit einer jeweiligen vorgegebenen Lösung für die jeweilige Prüfungsaufgabe für jede der mindestens einen ausgewählten Prüfungsaufgabe und Berechnen einer Ergebniszahl auf Grundlage des Prüfens der empfangenen Lösungseingabe auf Übereinstimmung mit der jeweiligen vorgegebenen Lösung und der gemessenen Zeit für jede der mindestens einen ausgewählten Prüfungsaufgabe. Die Erfindung bezieht sich ferner auf ein Computerprogramm umfassend Computerprogrammcode zum Durchführen des erfindungsgemäßen Verfahrens und auf ein elektronisches System zur Durchführung des erfindungsgemäßen Verfahrens.

## Beschreibung

Die vorliegende Erfindung betrifft ein Verfahren zur Messung der Intelligenz, ein Computerprogramm umfassend Computerprogrammcode zum Durchführen eines Verfahrens zur Messung der Intelligenz und ein elektronisches System zur Durchführung eines Verfahrens zur Messung der Intelligenz.

Psychometrische Verfahren werden in der Wissenschaft und Praxis zur Erfassung von Personenmerkmalen eingesetzt. Hierbei kann es sich um Leistungsdimensionen oder andere Personenmerkmale handeln. Insbesondere kann die Intelligenz einer Person ermittelt werden. Psychometrische Teste sollen, wie alle Messverfahren, Gütekriterien genügen. Zu den wichtigsten Gütekriterien zählen Objektivität, Reliabilität und Validität. Objektivität bezeichnet die Unabhängigkeit der Ergebnisse von den Rahmenbedingungen und wird durch eine standardisierte Durchführung, Auswertung und Interpretation sichergestellt. Reliabilität beschreibt den Grad der Zuverlässigkeit der Messergebnisse des gemessenen Merkmals. Ein Verfahren ist reliabel oder zuverlässig, wenn das Testergebnis reproduzierbar bzw. konstant ist. Validität beschreibt insgesamt den Grad der Genauigkeit, mit der ein Verfahren misst oder vorhersagt, was es messen oder vorhersagen soll.

Kognitive Leistungsteste - wozu auch Teste zur Messung der Intelligenz zählen - erfassen die kognitiven Fähigkeiten oder Fertigkeiten im Umgang mit standardisiert dargestellten Problemen. Man unterscheidet dabei zwischen sprach- und zahlengebundenen Aufgaben sowie sprachfreien Aufgaben (zum Beispiel Matrizen o.Ä.). Die Aufgaben oder Prüfungsaufgaben, die die zu beurteilende Person - im Folgenden Proband genannt - in kognitiven Leistungstesten zur Bearbeitung erhält, werden auch Items genannt. Der Proband wählt meistens aus einer Reihe von vorgegebenen Lösungsmöglichkeiten die Antwort aus, die er für die richtige Lösung hält. Alternativ kann auch gefordert sein, die Lösung ohne Hinweise frei und selbstständig zu generieren. Die vom Proband gegebene Antwort wird dann mithilfe eines vorgefertigten Lösungsschemas auf ihre Richtigkeit überprüft.

Um Unterschiede zwischen oder innerhalb von Gruppen zu analysieren kann die reine Anzahl der im Sinne der Skala beantworteten Aufgaben als Ergebnis des Messvorgangs geeignet sein, für anspruchsvolle, diagnostische Fragestellungen wird ein Verfahren jedoch erst dann brauchbar, wenn es normiert ist und die Ergebnisse eines Probanden in Bezug zu einer Eichstichprobe gesetzt werden können. Um ein Verfahren zu normieren, bearbeitet eine repräsentative Stichprobe aus Probanden den Test und die gewonnenen Ergebnisse werden als Vergleichsmaßstab für jedes individuelle Ergebnis herangezogen. Die erhobenen Testwerte werden transformiert, so dass Mittelwert und Streuung auf einen bestimmten bekannten Wert definiert sind. Bekannte Normskalen sind die z-Skala, die T-Wert-Skala, der Staninewert, die Centilskala und die Standardwertskala. Alternativ kann das Ergebnis auch in Form eines Prozentranges dargestellt werden. Dieser gibt an, wie viele Personen prozentual das gleiche oder ein niedrigeres Ergebnis erreicht haben. Ein Prozentrang von 75 bedeutet entsprechend, dass 75 % der Vergleichsstichprobe ein gleiches oder niedrigeres Ergebnis erreicht haben; 25 % der Vergleichsstichprobe entsprechend ein höheres. Im Folgenden wird als Ergebnisform der Prozentrang gewählt, da die Interpretation der Ergebnisse in Prozenträngen am anschaulichsten ist.

Üblicherweise werden kognitive Leistungsteste, also auch Teste zur Messung der Intelligenz, nach klassischer Testtheorie konstruiert. Hierbei wird ein feststehender Itemsatz aus verschiedenen Items mit meist unterschiedlicher Komplexität verwendet. Diese Items können zeitfrei, als Niveau-Test dargeboten werden; hierbei wird ausschließlich die Anzahl der richtig gelösten Items ausgewertet. Gibt es gleichzeitig noch eine zeitliche Beschränkung, spricht man von einer Mischung aus Niveau- und Geschwindigkeitstest. Das Ergebnis des Probanden errechnet sich aus der Anzahl der richtig gelösten Items in der gegebenen Zeit. Die Zeitbeschränkung kann sich dabei auf den gesamten Test oder auf einzelne Items beziehen.

Bei dieser Herangehensweise erhalten die Probanden entweder den gleichen Itemsatz oder einen von mehreren parallelen Itemsätzen, jedoch werden immer die gleiche Anzahl und eine vorher festgelegte Itemabfolge verwendet. Dies wird auch als lineares Testen bezeichnet. Der endgültige Satz von Items - der Itempool - umfasst daher nur die Items, die jedem Probanden auch tatsächlich vorgelegt werden.

Das bedeutet für die Itemkonstruktion, dass eine überschaubare Menge an Items generiert werden muss, aus der letztlich die, deren Eignung laut einer Analyse der Items im gewünschten Bereich liegen, zum Einsatz kommen. Diese Analyse der Items auf ihre Eigenschaften, insbesondere ihre Eignung als aussagekräftige Testaufgaben, wird auch Itemanalyse genannt. Wenn die Stichprobengröße, entsprechend der Anzahl der Probanden, die das Verfahren zur Bestimmung der Itemkennzahlen bearbeiten, ausreichend groß ist, also etwa 400 Personen und mehr umfasst, kann die Itemanalyse mit geringen statistischen Abschätzungen und relativ wenig Aufwand durchgeführt werden.

Der Umfang des Itempools richtet sich beim linearen Testen sowohl nach dem Durchführungszeitrahmen des Verfahrens als auch nach der erwünschten Messgenauigkeit. Mit zunehmender Itemanzahl steigt die Präzision einer Messung und der Messfehler wird immer kleiner, jedoch muss auch die Zumutbarkeit der Testdauer für den Probanden berücksichtigt werden. Ein Nachteil dieser Herangehensweise ist die empirisch oftmals beobachtete, geringe Messpräzision besonders im Mittelbereich der Stichprobe. Transformiert man die Rohwerte in Prozentränge, ergeben sich in den Randbereichen kleinschrittigere Abstufungen, im mittleren Bereich dagegen relativ große Sprünge.

Bei einem beispielhaften Test mit 47 Items und einer vorgesehenen Gesamtdauer von 50 Minuten, verteilen sich die 34, für jedes Rohwertergebnis vorhandenen Prozentrangwerte so, dass in dem Messbereich unter dem Prozentrang 10 neun Prozentrangwerte liegen, die jeweils zwischen null und 18 richtig gelösten Items unterscheiden. Im mittleren Messbereich ergeben sich größere Abstände zwischen den erreichbaren Prozentrangwerten: In den Messbereich zwischen 20 und 29 fallen drei Prozentrangwerte. Zwischen 30 und 39 fallen zwei Prozentrangwerte. Zwischen den Werten 40 und 49 liegt aber nur ein Prozentrangwert und zwischen 50 und 59, 60 und 69, 70 und 79 und zwischen 80 und 89 liegen jeweils nur zwei Prozentrangwerte. In den Messbereich über 90 wiederum fallen sechs Prozentrangwerte.

Wenn der Aufwand für den Probanden geringer werden soll, wird die Differenzierung im Mittelbereich sogar noch gröber. So ergibt sich für einen weiteren, ebenfalls beispielhaften Test mit 28 Items und einer Bearbeitungszeit von nur 14 Minuten eine Verteilung von Prozentrangwerten, bei der nur zwei Prozentrangwerte überhaupt in dem Bereich zwischen 40 und 60 liegen. Dagegen liegen vier Werte zwischen 95 und 100 und fünf Werte zwischen 0 und 5.

Zwischen Ergebnissen im Mittelbereich kann daher nur grob unterschieden werden. Um im mittleren Bereich präziser zu messen, kann die Itemanzahl erhöht werden. Jedoch wird durch die Erhöhung der Itemanzahl das Verfahren immer länger. Dabei nimmt die Differenzierung in der Mitte der Verteilung weitaus weniger zu als in den Randbereichen. Beim linearen Testen muss daher ein Kompromiss zwischen zeitlichem Umfang eines Messverfahrens und seiner Differenzierung im Mittelbereich geschaffen werden.

Eine alternative Testmethode zum klassischen linearen Testen ist das Testen nach Item-Response-Theorie. Mit dieser Herangehensweise kann die Messeffizienz erhöht werden. Testen nach dieser Theorie wird adaptives Testen genannt. Üblicherweise werden dem Probanden hierbei aus einer Gesamtmenge einzelne Items dargeboten, wobei das Antwortverhalten und insbesondere die Frage der Richtigkeit der Antwort des Probanden die Schwierigkeit des nachfolgenden Items bestimmt. Wenn ein Proband ein bestimmtes Item richtig beantwortet, wird als nächstfolgendes Item ein schwierigeres ausgesucht als das vorangegangene, bei falscher Beantwortung wird ein leichteres oder gleich schwieriges Item als nachfolgendes Item ausgesucht. Welches Item aus dem Itempool gezogen wird, wird durch einen mathematischen Algorithmus bestimmt, der nach der Item-Response-Theorie das bei der gegenwärtigen Fähigkeitsschätzung maximal informative Item auswählt. Dieser Prozess wiederholt sich, bis ausreichend Informationen für eine zuverlässige Aussage in Bezug auf die Fragestellung, z.B. die Leistungsfähigkeit oder speziell die Intelligenz des Probanden, gewonnen wurden.

Der Vorteil dieser Herangehensweise liegt in der kürzeren Durchführungszeit; der Proband muss vergleichsweise wenige Items bearbeiten.

Der Nachteil dieser Herangehensweise zeigt sich in der Testkonstruktion. Der Itempool in seiner Gesamtheit muss Items aller Schwierigkeitsstufen in ausreichender Anzahl enthalten. Das erfordert die Konstruktion einer großen Menge homogener, lokal unabhängiger Items, damit der Bezug zwischen Personenfähigkeit und Itemschwierigkeit eindeutig ist und der Konstruktbezug erhalten bleibt. Laut Experten wird hierzu ein minimaler Itempool von etwa 100 bis 200 Items benötigt. Für die Konstruktion bedeutet dies, dass sehr viel mehr Items generiert werden müssen als bei einem linearen Verfahren, nicht zuletzt, weil die Items sehr eng definierte Itemkennwerte aufweisen müssen. Die Items müssen für den eigentlichen Test kalibriert werden, d.h. dass die Itemparameter geschätzt und geordnet werden müssen. Eine präzise Bestimmung der Itemparameter ist aufwändig und erfordert einen Stichprobenumfang, je nach Anzahl der zu bestimmenden Parameter, von mindestens 1000 Probanden. Erst nach dieser Analyse kann der endgültige Itempool für das Verfahren zusammengestellt werden.

Ferner muss ein Abbruchkriterium definiert werden, welches angibt, wann einem Probanden keine weiteren Items mehr präsentiert werden, der Test also abgeschlossen ist. Ein weiterer Nachteil ist die fehlende Realitätsnähe der Konstruktionsstichprobe. Die ursprüngliche Konstruktionsstichprobe ist der Durchführungsstichprobe aufgrund des Umfangs der zu bearbeitenden Items oft nicht ähnlich. Bei der Durchführung werden aufwändige stochastische Methoden zur Schätzung der Personenparameter der Probanden für die Bestimmung der nächsten Items benötigt. Das adaptive Testen bedeutet insgesamt einen erheblichen Mehraufwand bei der Testkonstruktion gegenüber der Testkonstruktion nach klassischer Testtheorie.

Ausgehend von den zuvor beschriebenen Problemen der aus dem Stand der Technik bekannten Verfahren zur Messung der Intelligenz liegt der Erfindung die Aufgabe zugrunde, ein Verfahren zur Messung der Intelligenz, eine Vorrichtung zur Messung der Intelligenz, ein Computerprogramm umfassend Computerprogrammcode zum Durchführen eines solchen Verfahrens, ein computerlesbares Speichermedium mit einem Computerprogramm umfassend Computerprogrammcode zum Durchführen eines solchen Verfahrens und ein elektronisches System zur Durchführung eines solchen Verfahrens zur Verfügung zu stellen, welche eine genauere Unterscheidung der Ergebnisse von Prüflingen in dem mittleren Ergebnisbereich mit vertretbarem Aufwand ermöglichen.

Bezogen auf das Verfahren wird die zuvor hergeleitete und aufgezeigte Aufgabe durch ein Verfahren zur Messung der Intelligenz gelöst, welches das mindestens einmalige Ausführen der folgenden Schritte umfasst: das Auswählen mindestens einer Prüfungsaufgabe aus einer Menge an Prüfungsaufgaben, das Übertragen der mindestens einen ausgewählten Prüfungsaufgabe, das Empfangen einer Lösungseingabe und einer gemessenen Zeit zwischen einem Darstellen der jeweiligen Prüfungsaufgabe und der Lösungseingabe auf die jeweilige Prüfungsaufgabe für jede der mindestens einen ausgewählten Prüfungsaufgabe, das Prüfen der empfangenen Lösungseingabe auf Übereinstimmung mit einer jeweiligen vorgegebenen Lösung für die jeweilige Prüfungsaufgabe für jede der mindestens einen ausgewählten Prüfungsaufgabe und das Berechnen einer Ergebniszahl auf Grundlage des Prüfens der empfangenen Lösungseingabe auf Übereinstimmung mit der jeweiligen vorgegebenen Lösung und der gemessenen Zeit für jede der mindestens einen ausgewählten Prüfungsaufgabe.

Bezogen auf das elektronische System wird die zuvor hergeleitete und aufgezeigte Aufgabe durch ein elektronisches System zur Durchführung eines Verfahrens zur Messung der Intelligenz gelöst, welches umfasst: Mittel zum Auswählen mindestens einer Prüfungsaufgabe aus einer Menge an Prüfungsaufgaben, Mittel zum Übertragen der mindestens einen ausgewählten Prüfungsaufgabe, Mittel zum Empfangen einer Lösungseingabe und einer gemessenen Zeit zwischen einem Darstellen der jeweiligen Prüfungsaufgabe und der Lösungseingabe auf die jeweilige Prüfungsaufgabe für jede der mindestens einen ausgewählten Prüfungsaufgabe, Mittel zum Prüfen der empfangenen Lösungseingabe auf Übereinstimmung mit einer jeweiligen vorgegebenen Lösung auf die jeweilige Prüfungsaufgabe für jede der mindestens einen ausgewählten Prüfungsaufgabe und zum Ausgeben eines Ergebnisses, Mittel zum Berechnen einer Ergebniszahl auf Grundlage des Prüfens der empfangenen Lösungseingabe auf Übereinstimmung mit der jeweiligen vorgegebenen Lösung und der gemessenen Zeit für jede der mindestens einen ausgewählten Prüfungsaufgabe.

Bezogen auf die Vorrichtung wird die zuvor hergeleitete und aufgezeigte Aufgabe durch eine Vorrichtung gelöst, welche wenigstens einen Prozessor umfasst und wenigstens einen Speicher, welcher Computerprogrammcode enthält, wobei der wenigstens eine Speicher und der Computerprogrammcode dazu eingerichtet sind, mit den wenigstens einen Prozessor zu bewirken, dass die Vorrichtung wenigstens das oben beschriebene erfindungsgemäße Verfahren durchführt. Der im Speicher enthaltene Computerprogrammcode kann beispielsweise wenigstens teilweise Software oder Firmware für den Prozessor darstellen. Nicht-beschränkende Beispiele des Speichers stellen Random-Access Memory (RAM) oder Read-Only Memory (ROM) dar, auf welche der Prozessor Zugriff nehmen kann.

Bezogen auf das Computerprogramm wird die zuvor hergeleitete und aufgezeigte Aufgabe durch ein Computerprogramm gelöst, welches Computerprogrammcode zum Durchführen des oben beschriebenen erfindungsgemäßen Verfahrens umfasst wenn das Computerprogramm auf einem Prozessor ausgeführt wird. Das Computerprogramm ist beispielsweise durch ein Netzwerk verteilbar, wie etwa das Internet. Das Computerprogramm kann beispielsweise in einem computerlesbaren Medium speicher- oder kodierbar sein. Das Computerprogramm kann beispielsweise wenigstens teilweise Software oder Firmware für den Prozessor darstellen

Bezogen auf das computerlesbare Speichermedium wird die zuvor hergeleitete und aufgezeigte Aufgabe durch ein computerlesbares Speichermedium gelöst, auf welchem ein oben beschriebenes erfindungsgemäßes Computerprogramm abgespeichert ist. Das computerlesbare Speichermedium kann beispielsweise als ein elektrisches, magnetisches, elektromagnetisches, optisches oder anderes Speichermedium verkörpert sein und kann entweder ein entfernbares Speichermedium sein oder eines das fest in einer Vorrichtung oder in einem Gerät installiert ist. Nicht-beschränkende Beispiele solcher computerlesbarer Speichermedien sind ein RAM oder ein ROM. Das computerlesbare Speichermedium kann beispielsweise ein greifbares Speichermedium sein. Unter einem computerlesbaren Speichermedium ist ein Speichermedium zu verstehen, welches von einem Computer oder einem Prozessor lesbar ist.

Der Erfindung liegt die Erkenntnis zugrunde, dass es neben der Richtigkeit einer Antwort auf eine Prüfungsaufgabe, also ob eine bestimmte Prüfungsaufgabe überhaupt richtig beantwortet wurde, ebenso darauf ankommt, in welcher Zeit die Prüfungsaufgabe beantwortet wurde. Hierbei bedeutet die richtige Beantwortung innerhalb einer kürzeren Zeit eine bessere Leistung, damit ein besseres Prüfungsergebnis und also im Ergebnis eine höhere Perzentile als die richtige Beantwortung innerhalb einer längeren Zeit. Bei herkömmlichen Testverfahren zur Bestimmung der Intelligenz wird regelmäßig den Prüflingen eine feste Zeit für die Beantwortung aller Prüfungsaufgaben vorgegeben oder höchstenfalls eine bestimmte Zeit für die Beantwortung jeder einzelnen Frage, es wird aber jedenfalls nicht die Zeit festgehalten, welche zur Beantwortung jeder einzelnen Prüfungsaufgabe benötigt wurde und für die Auswertung der Lösungsantwort berücksichtigt. Durch eine Erfassung und Bewertung nicht nur der Richtigkeit der Antworten auf die Prüfungsaufgaben, sondern auch der für jede Prüfungsaufgabe benötigten Zeit kann bei einer gleichbleibenden Anzahl von Prüfungsaufgaben - und damit einer gleichbleibenden Gesamtdauer der Prüfung insgesamt - eine genauere Differenzierung der Ergebnisse erfolgen und zwar insbesondere in dem Bereich der mittleren Prüfungsergebnisse.

Ebenso lässt sich, bei gleichbleibender Genauigkeit der Prüfungsergebnisse, die Anzahl der erforderlichen Prüfungsaufgaben verringern.

Dieser Zusammenhang kann auch wie folgt erklärt werden: Die vorgestellte Methode zur differenzierteren Messung der Intelligenz kann sowohl bei klassischen Testverfahren wie auch bei adaptiven Testverfahren Nutzen bringen. Verfahren nach klassischer Testtheorie profitieren von der erhöhten Differenzierung der Ergebnisse im Mittelbereich der Stichprobe, die mittels Einbeziehung der Antwortzeit auch ohne Verlängerung der Gesamtdauer des Verfahrens zustande kommt. Die Differenzierung einer Antwort nach Antwortzeit bewirkt, dass der Proband nur eine Prüfungsaufgabe gestellt bekommt, aber mehrere Schwierigkeitsstufen einer einzelnen Prüfungsaufgabe bearbeitet. Wenn beispielsweise Prüfungsaufgaben richtig in kurzer Zeit bearbeitet werden, erhält der Proband einen Punkt für jede bewältigte Schwierigkeitsstufe. Wenn die Prüfungsaufgabe zum Beispiel nach Zeit in drei Schwierigkeitsstufen unterteilt ist und der Proband die Prüfungsaufgabe im kürzesten Zeitintervall richtig löst, hat dieser Proband die Prüfungsaufgabe automatisch auch in den leichteren Schwierigkeitsstufen richtig gelöst. Die Berechnung des Item-Rohwertes erfolgt auf Basis aller Rohwertergebnisse jeder Schwierigkeitsstufe einer Prüfungsaufgabe. Die Messeffizienz und die Messgenauigkeit werden gesteigert. Zusätzlich besteht die Möglichkeit, bei gleichbleibender Messgenauigkeit der Ergebnisse, die Anzahl der erforderlichen Prüfungsaufgaben zu verringern; in diesem Fall wird lediglich die Messeffizienz gesteigert.

Die Methode bewirkt bei adaptiven Verfahren, dass vergleichsweise weniger Items gestellt werden müssen, um das Schwierigkeitsniveau des Probanden einzuschätzen.

Dies hat nicht nur den Effekt, dass die benötigte Prüfungszeit des Probanden für ein Prüfungsergebnis der gewünschten Genauigkeit verringert wird, sondern es führt auch zu einem geringeren Datenübertragungsvolumen zwischen derjenigen Einheit, welche die Prüfungsaufgaben anzeigt und die Lösungseingaben annimmt und der Einheit, welche die Prüfungsaufgaben speichert, gegebenenfalls die nächste Prüfungsaufgabe aussucht und die Ergebnisse auswertet. Denn eine Verringerung der Gesamtzahl der Prüfungsaufgaben führt auch dazu, dass ein geringeres Volumen von auf die Prüfungsaufgaben bezogenen Daten übertragen werden muss. Speziell die Aufgabenstellung jeder Prüfungsaufgabe kann aufwändige grafische Elemente umfassen und deren Übertragung daher mit großen Datenvolumina verbunden sein. Die dafür erfindungsgemäß im Gegenzug zusätzlich erforderliche Übertragung der Antwortzeit hingegen stellt nur eine äußerst kleine Datenmenge dar.

Ferner kann durch eine Erfassung und Bewertung der Antwortzeit auch die Vor-Prüfung entsprechend der Konstruktion von Prüfungsaufgaben auf ihre statistische Tauglichkeit mit einer geringeren Anzahl von Probanden erfolgreich durchgeführt werden, als bei einer Vor-Prüfung ohne Messung der Antwortzeit auf einzelne Prüfungsaufgaben notwendig wären.

Jede einzelne Prüfungsaufgabe - welche gleichbedeutend mit einem Item ist - aus der Menge von Prüfungsaufgaben umfasst die grafische Darstellung der Aufgabenstellung, ob nun mit Texten, Bildern oder einer beliebigen anderen grafischen Repräsentation, sowie die verschiedenen vorgegebenen Lösungsmöglichkeiten für die Prüfungsaufgabe. Ferner ist jeder Prüfungsaufgabe eine richtige Lösung aus den vorgegebenen Lösungsmöglichkeiten zugeordnet.

Vorzugsweise erfolgt die Übertragung der Prüfungsaufgabe über ein beliebiges Kommunikationsnetzwerk unter Verwendung drahtloser oder drahtgebundener Kommunikationsmittel. Insbesondere kann die Übertragung der Prüfungsaufgabe auch von einem Bauteil innerhalb eines elektronischen Geräts zu einem anderen Bauteil innerhalb desselben elektronischen Geräts erfolgen. Die Lösungseingabe weist einen Zeitstempel entsprechend ihres Eingabezeitpunktes auf und entspricht der Auswahl einer der vorgegebenen Lösungsmöglichkeiten.

Es ist einerseits möglich, dass jede einzelne Prüfungsaufgabe aus der Menge der ausgewählten Prüfungsaufgaben einzeln übertragen wird, wobei dann die jeweils nächste Prüfungsaufgabe übertragen wird, sobald die Lösungseingabe und die gemessene Zeit für die jeweils vorherige Prüfungsaufgabe empfangen wurde. Andererseits ist es auch möglich, dass alle ausgewählten Prüfungsaufgaben gemeinsam übertragen werden. In diesem zweiten Fall werden vorzugsweise die Lösungseingabe und die gemessene Zeit für jede Prüfungsaufgabe einzeln empfangen sobald sie zur Verfügung stehen. Alternativ hierzu werden alle Lösungseingaben und gemessenen Zeiten gemeinsam nach Abschluss aller Prüfungsaufgaben empfangen.

Die Ergebniszahl stellt einen Gradmesser dafür dar, wie gut der Prüfling die Prüfungsaufgaben gelöst hat. Eine höhere Ergebniszahl entspricht hierbei einem besseren Prüfungsergebnis. Vorzugsweise wird die Ergebniszahl für jede einzelne Prüfungsaufgabe separat berechnet. Alternativ oder kumulativ hierzu kann die Ergebniszahl für alle ausgewählten Prüfungsaufgaben gemeinsam berechnet werden. Bei der Ergebniszahl für alle Prüfungsaufgaben kann es sich sowohl um eine Perzentile handeln, welche den Rang des Prüflings innerhalb einer Gruppe von Prüflingen angibt, als auch um eine beliebige andere quantitative Größe, welche eine Aussage über die Intelligenz macht.

Vorzugsweise sind mindestens drei unterschiedliche Werte als Ergebniszahl für jede Prüfungsaufgabe möglich.

Vorzugsweise wird die Erfindung elektronisch auf einem Server durchgeführt. Dieser Server hat Zugriff auf eine Datenbank mit vorgefertigten Prüfungsaufgaben. Der Server schickt an einen jeweiligen Client die Prüfungsaufgabe mit den Antwortmöglichkeiten und erhält von dem jeweiligen Client die vom Prüfling gewählte Lösungseingabe für jede Prüfungsaufgabe sowie die für die Lösungseingabe benötigte und vom Client gemessene Zeit. Auf dieser Grundlage hat der Server die Möglichkeit, ein Testergebnis zu berechnen und dieses mit den Testergebnissen weiterer Prüflinge in Bezug zu setzen.

Wenn die Prüfungsaufgaben an einem herkömmlichen Computerarbeitsplatz präsentiert werden und die Lösungseingaben durch ein herkömmliches Computereingabemittel erfasst werden, ist eine individuelle Messung der Antwortzeiten für jeden Prüfling ohne weitere technische Maßnahmen möglich.

Vorzugsweise wird das Verfahren zur Messung der Intelligenz über das Internet durchgeführt. Hierbei kann sowohl die Präsentation der Prüfungseingaben als auch die Erfassung der Lösungseingaben sowie die Zeitmessung entweder durch eine in einem Browser laufende Software oder durch das Ansteuern einer entsprechenden Webseite erfolgen, so dass jedwedes internetfähige Gerät, insbesondere ein Mobilgerät, zur Durchführung des Testes genügt. Die Auswahl der Prüfungsaufgaben sowie die Bewertung der Lösungseingaben und der benötigten Zeiten erfolgt auf einem zentralen Server.

In einer vorteilhaften Ausführungsform der Erfindung umfasst das Verfahren das mindestens einmalige Ausführen der folgenden Schritte: Empfangen der mindestens einen ausgewählten Prüfungsaufgabe, Darstellen der mindestens einen ausgewählten Prüfungsaufgabe, Messen einer Zeit zwischen dem Darstellen der mindestens einen ausgewählten Prüfungsaufgabe und der Lösungseingabe für jede der mindestens einen ausgewählten Prüfungsaufgabe und Übertragen der Lösungseingabe und der gemessenen Zeit für jede der mindestens einen ausgewählten Prüfungsaufgabe.

Das Darstellen der mindestens einen ausgewählten Prüfungsaufgabe umfasst das Darstellen der grafischen Darstellung der Aufgabenstellung, gegebenenfalls einschließlich von Texten, sowie der verschiedenen vorgegebenen Lösungsmöglichkeiten.

In einer weiteren vorteilhaften Ausführungsform der Erfindung umfasst das Auswählen der mindestens einen Prüfungsaufgabe aus der Menge an Prüfungsaufgaben das Auswählen einer Prüfungsaufgabe auf Grundlage des Prüfens mindestens einer vorher empfangenen Lösungseingabe auf Übereinstimmung mit der jeweiligen vorgegebenen Lösung und der gemessenen Zeit zwischen dem Darstellen der jeweiligen Prüfungsaufgabe und der Lösungseingabe auf die jeweilige Prüfungsaufgabe.

Anstatt eine feste Menge an Prüfungsaufgaben vorzusehen, welche den Prüflingen nacheinander gestellt werden, wird vorzugsweise eine weitere Differenzierung der Ergebnisse dadurch erreicht, dass die einem Prüfling als Nächstes gestellte Prüfungsaufgabe von der Richtigkeit und der Geschwindigkeit der Lösungseingabe zu einer oder mehrerer früherer Prüfungsaufgaben abhängt. Dies entspricht dem bereits vorgestellten Ansatz des adaptiven Testens. Wenn beispielsweise Prüfungsaufgaben richtig in kurzer Zeit beantwortet werden, wird als nächstes eine schwerere Prüfungsaufgabe gestellt um gewissermaßen eine obere Schwierigkeitsgrenze des Prüflings auszuloten. Umgekehrt wird bei vermehrter falscher Beantwortung von Prüfungsaufgaben der Schwierigkeitsgrad der nächsten Prüfungsaufgabe reduziert.

In einem solchen Fall wird bei der Auswertung der Lösungseingaben nicht einfach nur die Zahl der richtigen Antworten gezählt und bei den richtigen Antworten die jeweils gemessene Zeit berücksichtigt. Vielmehr dienen beispielsweise die ersten Prüfungsaufgaben der groben Einstufung des Prüflings in einen von mehreren gröberen Ergebnisbereichen - etwa obere Spitze, oberes Mittelfeld, Mittelfeld, unteres Mittelfeld und untere Spitze - und die weiteren Prüfungsaufgaben bezwecken dann eine genauere Einordnung innerhalb des jeweiligen Ergebnisbereiches. Alternativ wird mit jeder gestellten Prüfungsaufgabe iterativ in Abhängigkeit der Richtigkeit der Lösungseingabe und der dafür benötigten Zeit die Schwierigkeit der nächsten Prüfungsaufgabe inkrementell solange erhöht oder gesenkt, bis das definierte Abbruchkriterium erreicht ist.

In noch einer vorteilhaften Ausführungsform der Erfindung ist jeder Prüfungsaufgabe aus der Menge an Prüfungsaufgaben eine Schwierigkeitszahl zugeordnet, welche einen Schwierigkeitsgrad der Prüfungsaufgabe angibt, wobei eine Übereinstimmung der vorher empfangenen Lösungseingabe mit der jeweiligen vorgegebenen Lösung bei einer kürzeren gemessenen Zeit zwischen dem Darstellen der jeweiligen Prüfungsaufgabe und der Lösungseingabe auf die jeweilige Prüfungsaufgabe das Auswählen einer Prüfungsaufgabe mit einer Schwierigkeitszahl bewirkt, welche einen höheren Schwierigkeitsgrad angibt, und eine fehlende Übereinstimmung der vorher empfangenen Lösungseingabe mit der jeweiligen vorgegebenen Lösung oder eine Übereinstimmung der vorher empfangenen Lösungseingabe mit der jeweiligen vorgegebenen Lösung bei einer längeren gemessenen Zeit zwischen dem Darstellen der jeweiligen Prüfungsaufgabe und der Lösungseingabe auf die jeweilige Prüfungsaufgabe das Auswählen einer Prüfungsaufgabe mit einer Schwierigkeitszahl bewirkt, welche einen niedrigeren Schwierigkeitsgrad angibt.

Idealiter entspricht der Schwierigkeitsgrad der einzelnen Prüfungsaufgabe der zugeordneten Komplexität, welche beispielsweise dadurch bestimmt wird, wie viele Lösungsschritte zum Bestimmen der richtigen Lösung erforderlich sind. Insbesondere wird dann die Komplexität durch einen Zahlenwert angegeben. Eine höhere Komplexität bedeutet einen höheren Schwierigkeitsgrad der Prüfungsaufgabe.

Vorzugsweise fließt die einer Prüfungsaufgabe zugeordnete Schwierigkeitszahl dabei nicht nur wie oben beschrieben in die Auswahl der nächsten Prüfungsaufgabe, sondern auch in das Berechnen der Ergebniszahl ein. Beispielsweise geschieht dies dadurch, dass die für eine einzelne Prüfungsaufgabe berechnete Ergebniszahl proportional zur Schwierigkeitszahl ist. Weiter beispielsweise geschieht dies dadurch, dass zur Berechnung der Ergebniszahl nicht nur die Zahl der bisher richtig gelösten Prüfungsaufgaben gezählt wird, sondern dass bei der Berechnung der Ergebniszahl Prüfungsaufgaben mit einer höheren Schwierigkeitszahl stärker gewichtet werden als Prüfungsaufgaben mit einer weniger hohen Schwierigkeitszahl. Insbesondere wird die Ergebniszahl dadurch berechnet, dass die der Komplexität der richtig gelösten Prüfungsaufgaben entsprechenden Zahlenwerte addiert werden.

In einer weiteren vorteilhaften Ausführungsform der Erfindung umfasst das Berechnen der Ergebniszahl die Auswertung einer Funktion der gemessenen Zeit, wobei der Einfluss der Funktion auf die Ergebniszahl mit steigender gemessener Zeit monoton fallend ist. Beispielsweise fließt die gemessene Zeit als quadratischer und umgekehrt proportionaler Faktor in die Berechnung der Ergebniszahl ein.

Dies bedeutet, dass eine längere gemessene Zeit eine zumindest nicht bessere Punktzahl begründet als eine kürzere gemessene Zeit. Umgekehrt begründet eine kürzere gemessene Zeit eine zumindest nicht schlechtere Punktzahl als eine längere gemessene Zeit.

In einer weiteren vorteilhaften Ausführungsform der Erfindung umfasst das Berechnen der Ergebniszahl einen Vergleich der gemessenen Zeit mit mindestens einem Grenzwert, wobei ein Unterschreiten eines Grenzwertes der mindestens ein Grenzwerte eine höhere Ergebniszahl bewirkt als ein Überschreiten des Grenzwertes der mindestens ein Grenzwerte.

In wieder einer weiteren vorteilhaften Ausführungsform der Erfindung umfasst das Berechnen der Ergebniszahl einen Vergleich der gemessenen Zeit mit mindestens zwei Grenzwerten, wobei die mindestens zwei Grenzwerte mehrere Zeitbereiche definieren und wobei ein Unterschreiten jedes Grenzwertes eine höhere Ergebniszahl bewirkt als ein Überschreiten desselben Grenzwertes. Jedem Zeitbereich wird dabei eine Zahl zugeordnet. Bei der Berechnung der Ergebniszahl wird dann für jede einzelne Prüfungsaufgabe diejenige Zahl verwendet, welche dem Zeitbereich zugeordnet ist, innerhalb dessen die richtige Lösungseingabe gemacht wurde.

Diese vorteilhafte Ausführungsform der Erfindung kann dabei durch einen Satz von Prüfungsaufgaben - also einem Itempool - welcher für ein herkömmliches Verfahren zur Messung der Intelligenz vorbereitet wurde, wie folgt umgesetzt werden: Bei einer beispielhaften Einteilung der möglichen Antwortzeit für jede einzelne Prüfungsaufgabe durch drei Grenzwerte in vier Bereiche t₁, t₂, t₃ und t₄ kann jede ursprüngliche Prüfungsaufgabe stattdessen als Menge von vier Prüfungsaufgaben aufgefasst werden. Diese - hier - vier aus einer einzelnen herkömmlichen Prüfungsaufgabe A hervorgegangenen Prüfungsaufgaben A₁, A₂, A₃ und A₄ können auch als virtuelle Prüfungsaufgaben bezeichnet werden.

Diese Aufteilung in mehrere virtuelle Prüfungsaufgaben spiegelt sich in der Auswertung wie folgt wieder: Wird die Prüfungsaufgabe vor Ablauf der Zeit t₁ gelöst, so gelten alle vier virtuellen Prüfungsaufgaben A₁, A₂, A₃ und A₄ als gelöst. Wird die Prüfungsaufgabe nach Ablauf der Zeit t₁, aber vor Ablauf der Zeit t₂ gelöst, so gilt die virtuelle Prüfungsaufgabe A₁ als nicht gelöst, dafür aber die virtuellen Prüfungsaufgaben A₂, A₃ und A₄ als gelöst. Dieses Schema lässt sich entsprechend fortsetzen bis zu dem Fall, in dem die Prüfungsaufgabe gar nicht richtig beantwortet wird, woraus sich eine falsche Beantwortung aller virtuellen Prüfungsaufgaben A₁, A₂, A₃ und A₄ ergibt. Die Ergebniszahl einer einzelnen Prüfungsaufgabe kann dann der Summe der richtig beantworteten virtuellen Prüfungsaufgaben entsprechen.

Auf diese Weise kann der Itempool - also die Menge der Prüfungsaufgaben - eines herkömmlichen Testschemas dazu herangezogen werden, auf natürliche Weise eine größere Menge von Prüfungsaufgaben für ein erfindungsgemäßes Verfahren zu erzeugen, wodurch insbesondere die gewünschte genauere Differenzierung der Probanden im mittleren Bereich ermöglicht wird.

Wenn weiterhin den einzelnen Prüfungsaufgaben verschiedene Komplexitäten zugeordnet sind, wird die dem Zeitbereich zugeordnete Zahl zu der der Komplexität entsprechenden Zahl bei der Berechnung der Ergebniszahl addiert.

Eine Möglichkeit zur Bestimmung der oben genannten Grenzwerte besteht darin, die für die einzelne Prüfungsaufgabe vorgesehene Zeit linear einzuteilen. Die Zeitbereiche können alternativ auch dadurch bestimmt werden, dass vorab eine Gruppe von Probanden unter Zeitmessung die Prüfungsaufgabe löst und die Zeiteinteilung danach entsprechend den Perzentilen der Normalverteilung dieser Vorabprüfung erfolgt. So kann der Zeitbereich etwa eingeteilt werden in einen ersten Bereich, in welchem die 25% der schnellsten Probanden die Aufgabe richtig gelöst haben, in einen zweiten Bereich, in welchem die nächst langsameren 25% die Aufgabe gelöst haben und so weiter. In der Regel wird eine solche Einteilung in Zeitbereiche nicht linear sein.

Wie bereits angedeutet lässt sich, anstatt die Gesamtzahl der Prüfungsaufgaben beizubehalten und die Genauigkeit zu erhöhen, umgekehrt auch, bei etwa gleichbleibender Genauigkeit des Ergebnisses, die Gesamtzahl der Prüfungsaufgaben einer Prüfungszusammenstellung - also eines Gesamttestes zur Messung der Intelligenz - um einen Faktor reduzieren, welcher der Anzahl der Zeitbereiche entspricht, in welche die mögliche Zeit bis zur Lösungseingabe unterteilt ist. Wenn also ein Ergebnis für jede Prüfungsaufgabe in Abhängigkeit davon berechnet wird, in welchen von fünf Zeitbereichen die Lösungseingabe fällt, dann reduziert sich im Vergleich zu einem Verfahren, in welchem die Zeit bis zur Lösungseingabe nicht für jede Prüfungsaufgabe gemessen und bewertet wird, die Zahl der notwendigen Prüfungsaufgaben etwa um den Faktor fünf. Da die Messung und Auswertung der Zeit für die Lösungseingabe nur einen geringen und nicht zur Zahl der Prüfungsaufgaben proportionalen Mehraufwand erfordert, der Gesamtaufwand aber nahezu linear zur Zahl der gestellten Prüfungsaufgaben ist, lässt sich auf diese Weise eine dramatische Verminderung des Gesamtaufwands verwirklichen.

Das elektronische System gemäß der Erfindung kann sowohl in einer einzelnen Vorrichtung verwirklicht sein als auch auf verschiedene Vorrichtungen verteilt sein, welche lediglich in einer irgend gearteten kommunikativen Verbindung zu stehen brauchen. Insbesondere wird das elektronische System auf einem Desktop-Computer, einem Mainframe, einem Laptop, einem Smartphone, einem Mobiltelefon oder einem anderen mobilen elektronischen Gerät verwirklicht. Bei den einzelnen Mitteln muss es sich nicht um physikalisch abgrenzbare Komponenten handeln, vielmehr kann jedes einzelne Mittel auch aus einem entsprechenden Softwaremodul bestehen. Vorzugsweise handelt es sich bei den Mitteln zum Übertragen und Empfangen um Sockets im Sinne des TCP/IP-Protokollstapels. Alle Softwaremodule können sowohl auf demselben als auch auf verteilen Prozessoren laufen.

In einer vorteilhaften Ausführungsform der Erfindung ist das elektronische System in einem elektronischen Gerät umfasst. Es ist weiterhin möglich, dass einer Gruppe von Prüflingen dieselbe Menge an Prüfungsaufgaben in einer jeweils zufällig ausgewählten Reihenfolge präsentiert wird. Damit wird eine Verfälschung der Ergebnisse durch ein Abgucken der Prüflinge untereinander verhindert. Dies ist insbesondere dann sinnvoll, wenn die Prüfung in einem herkömmlichen Schulungsraum stattfinden soll, in dem die Anordnung der Computerbildschirme nicht notwendigerweise so ist, dass eine gegenseitige Einsichtnahme vermieden wird.

Vorzugsweise erfolgt eine dynamische Bewertung des Schwierigkeitsgrads der Prüfungsaufgabe. Beispielsweise wird rückwirkend oder auch während des Testverlaufs der zugewiesene Schwierigkeitsgrad einer Frage erhöht, wenn besonders wenige Prüflinge diese Frage richtig beantwortet haben. Umgekehrt wird der zugewiesene Schwierigkeitsgrad gesenkt, wenn besonders viele Prüflinge diese Frage richtig beantwortet haben.

Vorzugsweise fließt, anstelle eines Vergleichs der gemessenen Zeit mit festen Grenzwerten, die gemessene Zeit auf dem Wege einer kontinuierlichen Funktion in das Berechnen der Ergebniszahl ein. Diese Funktion hat vorzugsweise einen Verlauf, welcher der Funktion f(x) = 1/x entspricht. Allgemein gesprochen handelt es sich um eine für den Bereich x > 0 definierte Funktion mit einem Wertebereich y >= 0, welche monoton fallend oder streng monoton fallend ist. Dabei ist es möglich, dass die für die einzelne Prüfungsaufgabe berechnete Ergebniszahl auch nicht-ganzzahlig ist. Eine Reihe von nicht-ganzzahligen Ergebniszahlen für jede einzelne Prüfungsaufgabe kann in eine ganzzahlige Perzentile oder einen sonstigen ganzzahligen Gradmesser für die Intelligenz umgewandelt werden, etwa durch eine Rundung.

Es gibt nun eine Vielzahl von Möglichkeiten, das erfindungsgemäße Verfahren zur Messung der Intelligenz, das erfindungsgemäße Computerprogramm zum Durchführen eines Verfahrens zur Messung der Intelligenz und das erfindungsgemäße elektronische System zur Durchführung eines Verfahrens zur Messung der Intelligenz auszugestalten und weiterzubilden. Hierzu wird beispielsweise verwiesen einerseits auf die den Patentansprüchen 1, 8 und 9 nachgeordneten Patentansprüche und andererseits auf die Beschreibung der Ausführungsbeispiele in Verbindung mit der Zeichnung

In der Zeichnung zeigt
- Fig. 1: eine schematische Ansicht eines ersten Ausführungsbeispiels eines erfindungsgemäßen elektronischen Systems, welches einen Server und mehrere mit dem Server in Kommunikation stehende Clients umfasst,
- Fig. 2: eine schematische Ansicht eines zweiten Ausführungsbeispiels eines erfindungsgemäßen elektronischen Systems, welches in einem einzelnen Desktop-Computer verwirklicht ist.

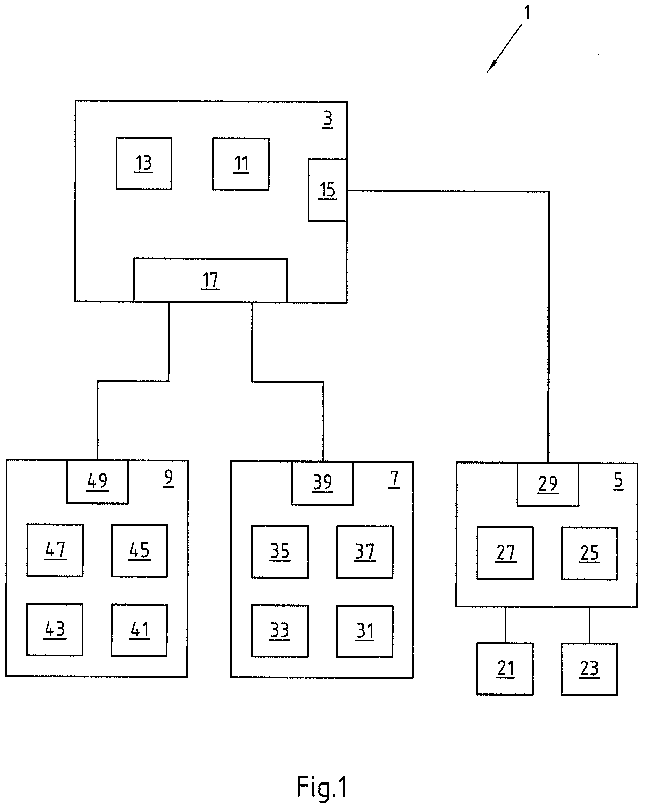

In Fig. 1 ist die schematische Ansicht eines ersten Ausführungsbeispiels eines erfindungsgemäßen elektronischen Systems zur Messung der Intelligenz 1 dargestellt.

Das elektronische System 1 umfasst einen Server 3 sowie einen ersten Client 5, einen zweiten Client 7 und einen dritten Client 9. Der Server 3 ist ein Computer, welcher eine Datenbank 11, eine Verarbeitungseinheit 13, drahtgebundene Kommunikationsmittel 15 sowie drahtlose Kommunikationsmittel 17 umfasst. In der Datenbank 11 ist eine Menge von Prüfungsaufgaben sowie eine Menge von Prüfungszusammenstellungen abgespeichert. Jede dieser Prüfungszusammenstellungen entspricht einem einzelnen Test zur Messung der Intelligenz. Jeder Prüfungszusammenstellung ist folglich eine Untermenge der in der Datenbank 11 abgespeicherten Prüfungsaufgaben sowie eine erlaubte Gesamtzeit für den Test zugeordnet.

Der erste Client 5 ist ein Desktopcomputer, der zweite Client 7 ist ein Laptop und der dritte Client 9 ist ein Smartphone. Der Server 3 kommuniziert mittels der drahtgebundenen Kommunikationsmittel 15 über das Internet mit dem ersten Client 5 und mittels der drahtlosen Kommunikationsmittel 17, beispielsweise unter Verwendung des Bluetooth-Protokolls, mit dem zweiten Client 7. Mit dem dritten Client 9 kommuniziert der Server 3 mittels der drahtgebundenen Kommunikationsmittel 15 über eine Mobilfunkinfrastruktur 19, zur Verfügung gestellt durch einen Mobilfunkanbieter. Jeder der Clients 5, 7, 9 soll von jeweils einem Prüfling zur Durchführung des Tests zur Messung der Intelligenz verwendet werden.

Der erste Client 5 umfasst eine Verarbeitungseinheit 25, eine Zeitmesseinrichtung 27 und drahtgebundene Kommunikationsmittel 29. An den ersten Client 5 sind eine Tastatur 23 und ein Bildschirm 21 angeschlossen.

Der zweite Client 7 umfasst einen Bildschirm 31, eine Tastatur 33, eine Verarbeitungseinheit 35, eine Zeitmesseinrichtung 37 und drahtlose Kommunikationsmittel 39. Der dritte Client 9 umfasst einen Bildschirm 41, eine Tastatur 43, eine Verarbeitungseinheit 45, eine Zeitmesseinrichtung 47 und drahtlose Kommunikationsmittel 49.

Nachfolgend wird eine erste Variante eines durch das erste Ausführungsbeispiel des erfindungsgemäßen Systems durchgeführten Tests zur Bestimmung der Intelligenz beschrieben.

Jede der in der Datenbank 11 abgespeicherten Prüfungsaufgaben umfasst die grafische Darstellung der Aufgabenstellung, eine Menge von vorgegebenen Lösungsmöglichkeiten, die richtige Lösung auf die Prüfungsaufgaben sowie ein Punkteschema in Abhängigkeit der Antwortzeit. Gemäß dem vorliegenden Punkteschema gibt eine falsche Antwort unabhängig von der gemessenen Eingabezeit null Punkte. Für eine richtige Antwort gibt es in Abhängigkeit der Eingabezeit Punkte. Die Eingabezeit ist die Zeit zwischen der Anzeige der grafischen Darstellung der Prüfungsaufgabe und der Lösungseingabe durch den Prüfling. Das Punkteschema ergibt sich beispielhaft wie folgt: Die für die einzelne Prüfungsaufgabe vorgesehene Testzeit wird in fünf gleich große Zeitbereiche unterteilt. Bei einer Eingabezeit in dem ersten, kürzesten Zeitbereich gibt es fünf Punkte. Bei einer Eingabezeit in dem angrenzenden, nächstkürzeren Zeitbereich gibt es vier Punkte usw. Bei einer Eingabezeit in dem letzten Zeitbereich oder bei einer Eingabezeit, die noch über den letzten Zeitbereich hinausgeht, gibt es einen Punkt.

Zu Beginn des Tests wird eine Prüfungszusammenstellung mit allen der Prüfungszusammenstellung zugeordneten Prüfungsaufgaben durch die Verarbeitungseinheit 13 aus der Datenbank 11 geladen. Die Prüfungszusammenstellung enthält auch eine feste Reihenfolge der ihr zugeordneten Prüfungsaufgaben.

Der Server 3 überträgt nun alle Prüfungsaufgaben der Prüfungszusammenstellung unter Kennzeichnung ihrer Reihenfolge an den ersten Client 5, den zweiten Client 7 und den dritten Client 9. Alternativ könnte der Server 3 auch nur die grafische Darstellung der Aufgabenstellung und die Menge von vorgegebenen Lösungsmöglichkeiten der Prüfungszusammenstellung an die Clients 5, 7, 9 übertragen.

Jeder der Clients 5, 7, 9 zeigt nun auf seinem jeweiligen Bildschirm 21, 31, 41 die grafische Darstellung der Aufgabenstellung und die Menge von vorgegebenen Lösungsmöglichkeiten an. Gleichzeitig beginnt jede der jeweiligen Zeitmesseinrichtungen 27, 37, 47 mit einer Zeitmessung.

Jeder Prüfling gibt nun an seinem jeweiligen Client 5, 7, 9 über die jeweilige Tastatur 23, 33, 43 seinen individuellen Lösungsvorschlag aus der vorgegebenen Menge an Lösungsmöglichkeiten ein. Die Eingabe jedes Prüflings ist von unterschiedlicher Übereinstimmung mit der richtigen Lösung und erfolgt zu jeweils unterschiedlicher Zeit, welche von der jeweiligen Zeitmesseinrichtung 27, 37, 47 festgehalten wird.

Unmittelbar nach der Eingabe des Lösungsvorschlags durch den Prüfling zeigt der jeweilige Client 5, 7, 9 auf seinem jeweiligen Bildschirm 21, 31, 41 die grafische Darstellung der Aufgabenstellung und die Menge von vorgegebenen Lösungsmöglichkeiten der nächsten Prüfungsaufgabe in der Prüfungszusammenstellung an. Gleichzeitig beginnt jede der jeweiligen Zeitmesseinrichtungen 27, 37, 47 mit einer neuerlichen Zeitmessung.

Gleichzeitig vergleichen die jeweiligen Verarbeitungseinheiten 25, 35, 45 den eingegebenen Lösungsvorschlag des Prüflings mit der richtigen Lösung und die gemessene Zeit bis zur Lösungseingabe mit dem dieser Prüfungsaufgabe zugeordneten Punkteschema. Die sich aus diesem Vergleich ergebende Punktezahl wird festgehalten und zurück an den Server 3 übermittelt. Alternativ werden der eingegebene Lösungsvorschlag und die Zeit bis zur Lösungseinsgabe an den Server 3 übertragen. Die Prüfung auf Übereinstimmung mit der richtigen Lösung und die Berechnung der Punkte aus dem Punkteschema findet dann in der Verarbeitungseinheit 13 des Servers 3 statt.

Dieser Vorgang wird nun solange fortgesetzt, bis entweder die gesamte für diese Prüfungszusammenstellung vorgesehene Zeit abgelaufen ist oder alle Prüflinge sämtliche Prüfungsaufgaben beantwortet haben.

Sofern die von den Clients 5, 7, 9 jeweils ermittelten Punktezahlen noch nicht an den Server 3 übermittelt wurden, werden diese nun an den Server 3 übermittelt zusammen mit weiteren Information, wie beispielsweise einer Aufstellung darüber, welche Prüfungsaufgaben von dem jeweiligen Prüfling gar nicht beantwortet wurden. Die Verarbeitungseinheit 13 des Servers 3 berechnet nun auf Grundlage der von den Clients 5, 7, 9 erhaltenen Daten, insbesondere der Punktezahlen, für jeden Prüfling ein Gesamtergebnis, welches sowohl einen perzentilen Rang als auch einen beliebigen anderen quantitativen Gradmesser der Intelligenz umfasst.

Als Nächstes wird eine zweite Variante eines durch das erste Ausführungsbeispiel des erfindungsgemäßen Systems durchgeführten Tests zur Bestimmung der Intelligenz beschrieben.

Diese zweite Variante unterscheidet sich von der ersten Variante darin, dass jeder der in der Datenbank 11 abgespeicherten Prüfungsaufgaben zusätzlich noch ein Schwierigkeitsgrad durch einen Zahlenwert zugeordnet ist und keine Reihenfolge der zu stellenden Prüfungsaufgaben von vornherein vorgegeben ist, sondern lediglich die erste Prüfungsaufgabe der Prüfungszusammenstellung. Der Schwierigkeitsgrad jeder einzelnen Prüfungsaufgabe ist gleichbedeutend mit der Komplexität der Prüfungsaufgabe.

Entsprechend den beiden Alternativen der oben beschriebenen ersten Variante können auch in der zweiten Variante zu Beginn entweder alle Prüfungsaufgaben vollständig an die Clients 5, 7, 9 übertragen werden oder nur die grafische Darstellung der Aufgabenstellung und die Menge von vorgegebenen Lösungsmöglichkeiten der Prüfungszusammenstellung.

Ferner ist in der zweiten Variante die Reihenfolge der Prüfungsaufgaben dynamisch. Speziell wird nach Beantwortung einer Prüfungsaufgabe die nächste Prüfungsaufgabe in Abhängigkeit der durch die Lösungseingabe für die vorherige Prüfungsaufgabe erreichten Punktzahl bestimmt. Hierbei führt eine hohe erreichte Punktzahl, entsprechend einer richtigen Lösungseingabe innerhalb einer kurzen gemessenen Zeit, zu der Auswahl einer nächsten Prüfungsaufgabe mit einem relativ höheren Schwierigkeitsgrad. Im Gegensatz dazu führt eine niedrige Punktzahl, entsprechend einer richtigen Lösungseingabe innerhalb einer längeren gemessenen Zeit oder gar einer falschen Lösungseingabe zu der Auswahl einer nächsten Prüfungsaufgabe mit einem relativ niedrigeren Schwierigkeitsgrad.

Je nachdem, ob die Prüfungsaufgaben vollständig an die Clients 5, 7, 9 übertragen wurden oder nicht, findet auch die Auswahl der jeweils nächsten Prüfungsaufgabe entweder in der jeweiligen Verarbeitungseinheit 25, 35, 45 der Clients oder in der Verarbeitungseinheit 13 des Servers 3 statt.

Das Gesamtergebnis für jeden Prüfling wird wiederum von der Verarbeitungseinheit 13 des Servers 3 berechnet auf Grundlage der von den Clients 5, 7, 9 erhaltenen Daten. Dabei werden aber nicht nur die jeweils erreichten Punktzahlen berücksichtigt, in welche die Richtigkeit und die gemessene Zeit für die Beantwortung eingeflossen sind, sondern auch das jeweilige Schwierigkeitsniveau der Prüfungsaufgaben.

Dies kann etwa dadurch geschehen, dass die für eine richtig beantwortete Prüfungsaufgabe bestimmten Punktzahlen auf Grundlage des Schwierigkeitsniveaus angepasst werden. Die dem Gesamtergebnis entsprechende Perzentile oder der sonstige quantitative Gradmesser der Intelligenz ist dann durch dieses Schwierigkeitsniveau vorgegeben.

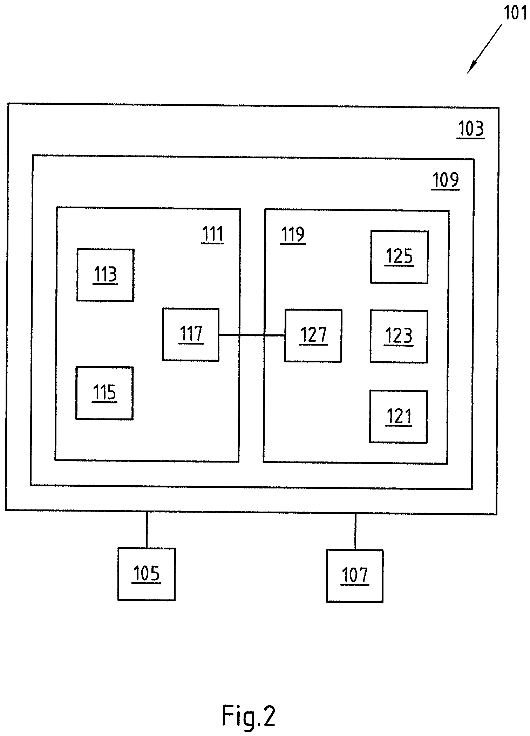

In Fig. 2 ist die schematische Ansicht eines zweiten Ausführungsbeispiels eines erfindungsgemäßen elektronischen Systems zur Messung der Intelligenz 101 dargestellt. Das elektronische System 101 umfasst einen Desktop-Computer 103 mit einer Datenverarbeitungseinheit 109. An den Desktopcomputer 103 ist ein Bildschirm 105 und eine Tastatur 107 angeschlossen. Die Datenverarbeitungseinheit 109 umfasst als Softwarekomponente eine Serveranwendung 111, welche wiederum eine Datenbank 113, ein Prüfungslogikmodul 115 und ein erstes Datenaustauschmodul 117 umfasst. Ferner umfasst die Datenverarbeitungseinheit 109 als weitere Softwarekomponente eine Clientanwendung 119, welche wiederum ein Ein-Ausgabemodul 121, ein Zeitmessungsmodul 123, ein Logikmodul 125 und ein zweites Datenaustauschmodul 127 umfasst.

Das elektronische System 101 führt nun analog zu dem in Fig. 1 dargestellten und obenstehend beschriebenen elektronischen System 1 die Tests zur Bestimmung der Intelligenz in den beiden beschriebenen Varianten aus.

Dabei übernimmt die Serveranwendung 113 die Rolle des Servers 3 und die Clientanwendung 119 die Rolle einer der Clients 3, 5, 7 des ersten beschriebenen Ausführungsbeispiels, wobei die Serveranwendung 113 und die Clientanwendung 119 durch das erste Datenaustauchmodul 117 und das zweite Datenaustauschmodul 127 in Verbindung stehen.

Das Prüfungslogikmodul 115 führt dabei die Berechnung des Gesamtergebnisses und gegebenenfalls die Bestimmung der Punktzahl der Lösungseingabe einer Prüfungsaufgabe in Abhängigkeit der Richtigkeit der Lösungseingabe und der für die Lösungseinsgabe benötigten Zeit aus. Gemäß der zweiten Variante sucht das Prüfungslogikmodul 115 auch die nächste Prüfungsaufgabe in Abhängigkeit der Richtigkeit und der für die Lösungseingabe benötigten Zeit der vorherigen Prüfungsaufgabe aus.

Das Ein-Ausgabemodul 121 veranlasst die grafische Darstellung der Aufgabenstellung und der vorgegebenen Lösungsmöglichkeiten auf dem Bildschirm 105 und nimmt die Lösungseingabe des Prüflings durch die Tastatur 107 an. Im Zusammenspiel mit dem Zeitmessungsmodul 123 wird die für die Lösungseingabe benötigte Zeit gemessen. Gegebenenfalls führt das Prüfungslogikmodul 115 die Bestimmung der Punktzahl der Lösungseingabe einer Prüfungsaufgabe in Abhängigkeit der Richtigkeit der Lösungseingabe und der für die Lösungseinsgabe benötigten Zeit aus.

Im Gegensatz zum ersten Ausführungsbeispiel wird beim elektronischen System zur Messung der Intelligenz 101 ein einzelner Prüfling zur selben Zeit geprüft. Nach Abschluss der Prüfung eines Prüflings kann sich der nächste Prüfling unter den gleichen Zeitvorgaben dem Test zur Bestimmung der Intelligenz unterziehen.

## Patentansprüche

1. Verfahren zur Messung der Intelligenz, umfassend das mindestens einmalige Ausführen der Schritte:
- Auswählen mindestens einer Prüfungsaufgabe aus einer Menge an Prüfungsaufgaben;
- Übertragen der mindestens einen ausgewählten Prüfungsaufgabe;
- Empfangen einer Lösungseingabe und einer gemessenen Zeit zwischen einem Darstellen der jeweiligen Prüfungsaufgabe und der Lösungseingabe auf die jeweilige Prüfungsaufgabe für jede der mindestens einen ausgewählten Prüfungsaufgabe;
- Prüfen der empfangenen Lösungseingabe auf Übereinstimmung mit einer jeweiligen vorgegebenen Lösung für die jeweilige Prüfungsaufgabe für jede der mindestens einen ausgewählten Prüfungsaufgabe;
- Berechnen einer Ergebniszahl auf Grundlage des Prüfens der empfangenen Lösungseingabe auf Übereinstimmung mit der jeweiligen vorgegebenen Lösung und der gemessenen Zeit für jede der mindestens einen ausgewählten Prüfungsaufgabe.

2. Verfahren nach Anspruch 1,
**dadurch gekennzeichnet, dass** das Verfahren das mindestens einmalige Ausführen der Schritte umfasst:
- Empfangen der mindestens einen ausgewählten Prüfungsaufgabe;
- Darstellen der mindestens einen ausgewählten Prüfungsaufgabe;
- Messen einer Zeit zwischen dem Darstellen der mindestens einen ausgewählten Prüfungsaufgabe und der Lösungseingabe für jede der mindestens einen ausgewählten Prüfungsaufgabe;
- Übertragen der Lösungseingabe und der gemessenen Zeit für jede der mindestens einen ausgewählten Prüfungsaufgabe.

3. Verfahren nach Anspruch 1 oder 2,
**dadurch gekennzeichnet, dass** das Auswählen der mindestens einen Prüfungsaufgabe aus der Menge an Prüfungsaufgaben das Auswählen einer Prüfungsaufgabe auf Grundlage des Prüfens mindestens einer vorher empfangenen Lösungseingabe auf Übereinstimmung mit der jeweiligen vorgegebenen Lösung und der gemessenen Zeit zwischen dem Darstellen der jeweiligen Prüfungsaufgabe und der Lösungseingabe auf die jeweilige Prüfungsaufgabe umfasst.

4. Verfahren nach Anspruch 3,
**dadurch gekennzeichnet, dass** jeder Prüfungsaufgabe aus der Menge an Prüfungsaufgaben eine Schwierigkeitszahl zugeordnet ist, welche einen Schwierigkeitsgrad der Prüfungsaufgabe angibt und dass eine Übereinstimmung der vorher empfangenen Lösungseingabe mit der jeweiligen vorgegebenen Lösung bei einer kürzeren gemessenen Zeit zwischen dem Darstellen der jeweiligen Prüfungsaufgabe und der Lösungseingabe auf die jeweilige Prüfungsaufgabe das Auswählen einer Prüfungsaufgabe mit einer Schwierigkeitszahl bewirkt, welche einen höheren Schwierigkeitsgrad angibt, und eine fehlende Übereinstimmung der vorher empfangenen Lösungseingabe mit der jeweiligen vorgegebenen Lösung oder eine Übereinstimmung der vorher empfangenen Lösungseingabe mit der jeweiligen vorgegebenen Lösung bei einer längeren gemessenen Zeit zwischen dem Darstellen der jeweiligen Prüfungsaufgabe und der Lösungseingabe auf die jeweilige Prüfungsaufgabe das Auswählen einer Prüfungsaufgabe mit einer Schwierigkeitszahl bewirkt, welche einen niedrigeren Schwierigkeitsgrad angibt.

5. Verfahren nach einem der Ansprüche 1 bis 4,
**dadurch gekennzeichnet, dass** das Berechnen der Ergebniszahl die Auswertung einer Funktion der gemessenen Zeit umfasst, wobei der Einfluss der Funktion auf die Ergebniszahl mit steigender gemessener Zeit monoton fallend ist.

6. Verfahren nach Anspruch 5,
**dadurch gekennzeichnet, dass** das Berechnen der Ergebniszahl einen Vergleich der gemessenen Zeit mit mindestens einem Grenzwert umfasst, wobei ein Unterschreiten eines Grenzwertes der mindesten ein Grenzwerte eine höhere Ergebniszahl bewirkt als ein Überschreiten des Grenzwertes der mindesten ein Grenzwerte.

7. Verfahren nach Anspruch 6,
**dadurch gekennzeichnet, dass** das Berechnen der Ergebniszahl einen Vergleich der gemessenen Zeit mit mindestens zwei Grenzwerten umfasst, wobei die mindestens zwei Grenzwerte mehrere Zeitbereiche definieren und wobei ein Unterschreiten jedes Grenzwertes eine höhere Ergebniszahl bewirkt als ein Überschreiten des selben Grenzwertes.

8. Computerprogramm umfassend Computerprogrammcode zum Durchführen eines Verfahrens nach einem der Ansprüche 1 bis 7.

9. Elektronisches System zur Durchführung eines Verfahrens zur Messung der Intelligenz, umfassend
- Mittel zum Auswählen mindestens einer Prüfungsaufgabe aus einer Menge an Prüfungsaufgaben;
- Mittel zum Übertragen der mindestens einen ausgewählten Prüfungsaufgabe;
- Mittel zum Empfangen einer Lösungseingabe und einer gemessenen Zeit zwischen einem Darstellen der jeweiligen Prüfungsaufgabe und der Lösungseingabe auf die jeweilige Prüfungsaufgabe für jede der mindestens einen ausgewählten Prüfungsaufgabe;
- Mittel zum Prüfen der empfangenen Lösungseingabe auf Übereinstimmung mit einer jeweiligen vorgegebenen Lösung auf die jeweilige Prüfungsaufgabe für jede der mindestens einen ausgewählten Prüfungsaufgabe und zum Ausgeben eines Ergebnisses;
- Mittel zum Berechnen einer Ergebniszahl auf Grundlage des Prüfens der empfangenen Lösungseingabe auf Übereinstimmung mit der jeweiligen vorgegebenen Lösung und der gemessenen Zeit für jede der mindestens einen ausgewählten Prüfungsaufgabe.

10. Elektronisches System nach Anspruch 9,
**dadurch gekennzeichnet, dass** das elektronische System umfasst:
- Mittel zum Empfangen der mindestens einen ausgewählten Prüfungsaufgabe;
- Mittel zum Darstellen der mindestens einen ausgewählten Prüfungsaufgabe;
- Mittel zur Eingabe mindestens einer Lösungseingabe auf die mindestens eine ausgewählte Prüfungsaufgabe;
- Mittel zum Messen einer Zeit zwischen dem Darstellen der mindestens einen ausgewählten Prüfungsaufgabe und der Lösungseingabe für jede der mindestens einen ausgewählten Prüfungsaufgabe;
- Mittel zum Übertragen der Lösungseingabe und der gemessenen Zeit für jede der mindestens einen ausgewählten Prüfungsaufgabe.

11. Elektronisches System nach Anspruch 9 oder 10,
**dadurch gekennzeichnet, dass** die Mittel zum Auswählen der mindestens einen Prüfungsaufgabe aus der Menge an Prüfungsaufgaben eingerichtet sind zum Auswählen einer Prüfungsaufgabe auf Grundlage des Ergebnisses der Mittel zum Prüfen und der gemessenen Zeit zwischen dem Darstellen der jeweiligen Prüfungsaufgabe und der Eingabe der Lösungseingabe auf die jeweilige Prüfungsaufgabe.

12. Elektronisches System nach Anspruch 11,
**dadurch gekennzeichnet, dass** jeder Prüfungsaufgabe aus der Menge an Prüfungsaufgaben eine Schwierigkeitszahl zugeordnet ist, welche einen Schwierigkeitsgrad der Prüfungsaufgabe angibt und dass die Mittel zum Berechnen der Ergebniszahl so eingerichtet sind, dass eine Übereinstimmung der vorher empfangenen Lösungseingabe mit der jeweiligen vorgegebenen Lösung bei einer kürzeren gemessenen Zeit zwischen dem Darstellen der jeweiligen Prüfungsaufgabe und der Lösungseingabe auf die jeweilige Prüfungsaufgabe das Auswählen einer Prüfungsaufgabe mit einer Schwierigkeitszahl bewirkt, welche einen höheren Schwierigkeitsgrad angibt, und eine fehlende Übereinstimmung der vorher empfangenen Lösungseingabe mit der jeweiligen vorgegebenen Lösung oder eine Übereinstimmung der vorher empfangenen Lösungseingabe mit der jeweiligen vorgegebenen Lösung bei einer längeren gemessenen Zeit zwischen dem Darstellen der jeweiligen Prüfungsaufgabe und der Lösungseingabe auf die jeweilige Prüfungsaufgabe das Auswählen einer Prüfungsaufgabe mit einer Schwierigkeitszahl bewirkt, welche einen niedrigeren Schwierigkeitsgrad angibt.

13. Elektronisches System nach einem der Ansprüche 9 bis 12, **dadurch gekennzeichnet, dass** die Mittel zum Berechnen dazu eingerichtet sind, eine Funktion der gemessenen Zeit auszuwerten, wobei der Einfluss der Funktion auf die Ergebniszahl mit steigender gemessener Zeit monoton fallend ist.

14. Elektronisches System nach Anspruch 13,
**dadurch gekennzeichnet, dass** die Mittel zum Berechnen dazu eingerichtet sind, die gemessene Zeit mit mindestens einem Grenzwert zu vergleichen, wobei ein Unterschreiten eines Grenzwertes der mindesten ein Grenzwerte eine höhere Ergebniszahl bewirkt als ein Überschreiten des Grenzwertes der mindesten ein Grenzwerte.

15. Elektronisches System nach Anspruch 14,
**dadurch gekennzeichnet, dass** die Mittel zum Berechnen dazu eingerichtet sind, die gemessene Zeit mit mindestens zwei Grenzwerten zu vergleichen, wobei die mindestens zwei Grenzwerte mehrere Zeitbereiche definieren und wobei ein Unterschreiten jedes Grenzwertes eine höhere Ergebniszahl bewirkt als ein Überschreiten des selben Grenzwertes.

16. Elektronisches System nach einem der Ansprüche 9 bis 15, **dadurch gekennzeichnet, dass** das elektronische System in einem elektronischen Gerät umfasst ist.
